# FASCICULE DE BREVET EUROPEEN

(11) **EP 1 043 790 B1**
(45) Date de publication et mention de la délivrance du brevet: **03.08.2005**
(21) Numéro de dépôt: 00420069.7
(22) Date de dépôt: 06.04.2000
(51) Int. Cl.: H01M 4/66, H01M 4/02, H01M 10/40

(54) **Revêtement de collecteur de courant pour accumulateurs au lithium**
Stromkollektorbekleidung von Lithiumsekundärbatterien
Current collector coating of lithium storage batteries

(30) Priorité: 07.04.1999 CA 2268355
(43) Date de publication de la demande: 11.10.2000
(73) Titulaire: HYDRO-QUEBEC, Montréal Québec H2Z 1A4 (CA)
(72) Inventeur: Gauthier, Michel, La Prairie, Québec J5R 1E6 (CA); Besner, Simon, Coteau-du-Lac, Québec J0P 1B0 (CA); Armand, Michel, Montréal, Québec H3T 1N2 (CA); Hamelin, Hugues, Montréal, Québec H2Z 1A4 (CA); Magnan, Jean-François, Neuville, Québec G0A 2R0 (CA); Belanger, André, Sainte-Julie, Québec J3E 1K1 (CA)
(74) Mandataire: Guerre, Dominique

(56) Documents cités:
- US-A- 5 262 254
- US-A- 5 573 554
- PATENT ABSTRACTS OF JAPAN vol. 1998, no. 13, 30 novembre 1998 (1998-11-30) & JP 10 208747 A (HITACHI LTD), 7 août 1998 (1998-08-07)

## Description

### DOMAINE DE L'INVENTION

La présente invention concerne un revêtement protecteur de courant appliqué sur le collecteur métallique d'une électrode. Le revêtement protecteur comprend un liant minéral partiellement ou totalement vitreux et optionnellement un additif de conduction électronique. Ce revêtement est appliqué sous forme de solution ou dispersion sur le collecteur de électrode, et séché, de façon à couvrir et protéger au moins une partie de la surface du métal du collecteur afin d'éviter la formation de films isolants engendrés par les espèces actives provenant des autres composantes du générateur.

### ART ANTÉRIEUR

Les accumulateurs au lithium offrent en principe l'avantage unique d'atteindre des énergies volumiques et spécifiques insurpassées qui les rendent particulièrement intéressants pour une vaste gamme d'applications stationnaires ou mobiles qui vont de la microélectronique, de l'électronique portable jusqu'aux larges installations pour les véhicules électriques ou hybrides électriques.

Ces systèmes utilisent généralement des électrolytes aprotiques liquides principalement de type lithium-ion et plus récemment des électrolytes polymères, ces derniers étant soit de type polymère solvatant sec, fonctionnant entre 40 et 100°C avec des anodes de lithium, soit de type gélifié, utilisant un polymère solvatant ou non, et fonctionnant à la température ambiante grâce à l'addition de solvants liquides aprotiques polaires en association avec des électrodes de type lithium-ion dont les cathodes fonctionnent à des tensions élevées (~ 4V). Les conditions extrêmes de température ou de tension de fonctionnement élevées propres à ces systèmes ont tendance à faire vieillir les différentes composantes du générateur au cyclage et/ou en fonction du temps.

Le vieillissement des composantes se traduit notamment au niveau des collecteurs de courant et entraîne la formation de films de passivation ou de dégradation en surface de ces derniers par réaction avec les composantes du générateur, en l'occurrence les matériaux actifs des électrodes et les composantes chimiques de l'électrolyte organique. La formation de tels films plus ou moins isolants aux interfaces altère grandement la qualité des échanges électroniques entre les collecteurs et les matériaux actifs d'électrode, qui sont généralement présents sous forme de composites.

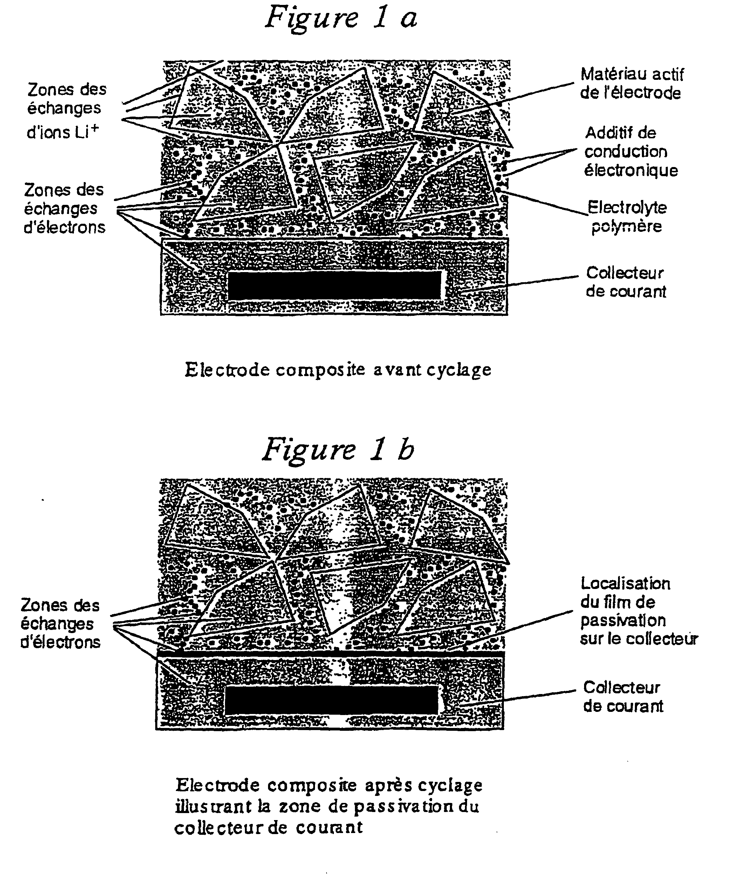

En milieu électrolyte polymère, l'effet des phénomènes de passivation est parfois amplifié parce qu'à l'état solide, les produits formés par les réactions du solvant organique, du sel de lithium, des matériaux d'électrodes ou en provenance d'autres composantes du générateur tendent à s'accumuler à l'interface par manque de convection du solvant ou de solubilisation des films formés, ou encore par manque de réaction de corrosion/dissolution du métal et de renouvellement de la surface d'échange. L'attaque des collecteurs ou la formation de films de passivation en surface par oxydation/dissolution du conducteur métallique est généralement causée par des réactions électrochimiques, notamment d'oxydation ou réduction, initiées par des radicaux, des réactions acide-base ou encore des réactions chimiques d'oxydation-réduction plus ou moins catalysées par les matériaux en présence. Les Figures 1a) et 1b) illustrent un ensemble collecteur/électrode composite et la localisation du film de passivation à l'interface collecteur/électrode après cyclage.

Les phénomènes de passivation sont particulièrement évidents dans le cas des collecteurs d'aluminium fréquemment utilisés pour leur bas coût et pour leurs propriétés de conduction thermique et électrique avec les cathodes associées à des voltages de fin de charge fréquemment supérieures à 3 et même à 4 volts.

Dans les systèmes de type lithium-ion utilisant des électrolytes liquides ou des polymères gélifiés avec des liquides, la corrosion de l'aluminium du collecteur de la cathode est généralement évitée par l'usage d'un sel ou d'un additif fluoré de type LiBF₄ et LiPF₆ qui forment facilement un film fluoré en surface de l'aluminium, ou encore par l'anion oxydant ClO₄, évitant ainsi la corrosion profonde ou la dissolution du collecteur d'aluminium. Avec d'autres sels fluorés particulièrement stables, tels que le TFSI de formule (CF₃SO₂)₂NLi la corrosion de l'aluminium au-dessus de 4 volts peut conduire à la désintégration complète du collecteur.

En milieu polymère sec, la formation de films de passivation sur le collecteur d'aluminium d'une cathode à base d'oxyde de vanadium tel que V₂O₅, ne conduit pas à la dissolution du collecteur, mais plutôt à la formation de films de passivation plus ou moins isolants qui augmentent la résistance électrique entre le collecteur et la cathode composite. On constate alors la formation de films d'oxydation de l'aluminium à base d'oxygène et de fluor, visibles en microscopie électronique, qui atteignent des épaisseurs supérieures aux films d'alumine initialement présents en surface de l'aluminium. De tels films sont plus ou moins isolants électriques et nuisent donc au passage des électrons entre le collecteur et les matériaux actifs et de conduction électronique présents dans la cathode.

Une façon connue depuis longtemps de protéger les collecteurs métalliques de courant des accumulateurs électrochimiques des phénomènes de passivation/dissolution est de recouvrir ces derniers d'un revêtement carboné conducteur électronique peu oxydable. Généralement, des dispersions de noirs de carbone dans des liants organiques ou minéraux sont utilisées sous forme de couche de fond plus ou moins étanches à l'électrolyte du générateur de façon à éviter les phénomènes de corrosion électrochimiques. De plus, ces revêtements évitent un contact direct du collecteur avec les matériaux actifs de l'électrode (voir par exemple le brevet US 5,262,254). Ces solutions sont utilisées avec succès dans plusieurs applications commerciales. Toutefois, aucune d'entre elles n'est parfaitement satisfaisante, particulièrement lorsque les générateurs électrochimiques sont utilisés dans les conditions extrêmes précédemment décrites et sur de longues périodes de temps, notamment à cause du manque d'imperméabilité et de stabilité chimique ou électrochimique des liants organiques, ou encore des additifs de conduction métalliques ou polymères conjugués.

Le brevet US 5,580,686 (Fauteux et al.) décrit un revêtement protecteur ("primer") à base de carbone dispersé dans un polysilicate métallique utilisé dans une cellule électrolytique de type lithium-ion comportant une cathode d'oxyde de cobalt et une anode de graphite. Les polysilicates comportent plusieurs limitations à cause de leur forte basicité. Ainsi, ils sont réactifs vis-à-vis de matériaux actifs d'électrodes acides tel que l'oxyde de vanadium. De plus, ils sont réactifs chimiquement avec des matériaux de type phosphate de fer. Leur caractère basique les rend en outre incompatibles avec les additifs de conduction constitués de polymères conjugués de type polyaniline, polypyrole dopés etc.

Dans la plupart ces applications le carbone est l'additif généralement préféré à cause de sa grande inertie chimique et de sa résistance à la corrosion électrochimique.

### SOMMAIRE DE L'INVENTION

La présente invention concerne un générateur électrochimique comprenant un électrolyte séparateur entre deux électrodes dont au moins une des électrodes utilise un collecteur de courant métallique partiellement ou totalement recouvert d'un revêtement conducteur protecteur, chimiquement compatible avec le matériau d'électrode adjacent, ledit revêtement comprenant un liant minéral vitreux ou partiellement vitreux incluant un phosphate, un polyphosphate, un borate ou un polyborate d'un métal alcalin, ou leurs mélanges dans lequel est optionnellement dispersé un additif de conduction électronique assurant les échanges électroniques entre l'électrode et le collecteur, ledit revêtement étant mis en contact étanche avec ledit collecteur afin de protéger la surface métallique couverte de la formation de films de passivation engendrés par les espèces réactives provenant des composantes du générateur.

Dans un second aspect de l'invention, on retrouve un procédé de revêtement partiel ou total d'un protecteur de courant sur le collecteur métallique d'une électrode, le procédé comprenant:
a) la préparation d'une dispersion solution aqueuse d'un liant minéral partiellement ou totalement vitreux incluant un phosphate, un polyphosphate, un borate ou un polyborate d'un métal alcalin, ou leurs mélanges que l'on neutralise de façon à assurer la compatibilité du liant avec le matériau actif de l'électrode et dans lequel on disperse optionnellement au moins un additif de conduction électronique;
b) l'enduction du mélange obtenu dans l'étape a) sur le métal du collecteur et séchage de façon à couvrir et protéger au moins une partie de la surface du métal afin d'éviter la formation de films de passivation engendrés par les espèces actives provenant des autres composantes du générateur.

Dans un troisième aspect de l'invention, on retrouve une électrode comprenant un collecteur de courant métallique partiellement ou totalement recouvert d'un revêtement conducteur protecteur, chimiquement compatible avec le matériau d'électrode adjacent, ledit revêtement comprenant un liant minéral vitreux ou partiellement vitreux incluant un phosphate, un polyphosphate, un borate ou un polyborate d'un métal alcalin, ou leurs mélanges dans lequel est optionnellement dispersé un additif de conduction électronique assurant les échanges électroniques entre l'électrode et le collecteur, ledit revêtement étant mis en contact étanche avec ledit collecteur afin de protéger la surface métallique couverte de la formation de films de passivation engendrés par les espèces réactives provenant des composantes du générateur.

### DANS LES DESSINS

Les Figures 1a) et 1b) illustrent un ensemble collecteur/électrode composite et la localisation du film de passivation à l'interface collecteur/électrode après cyclage.

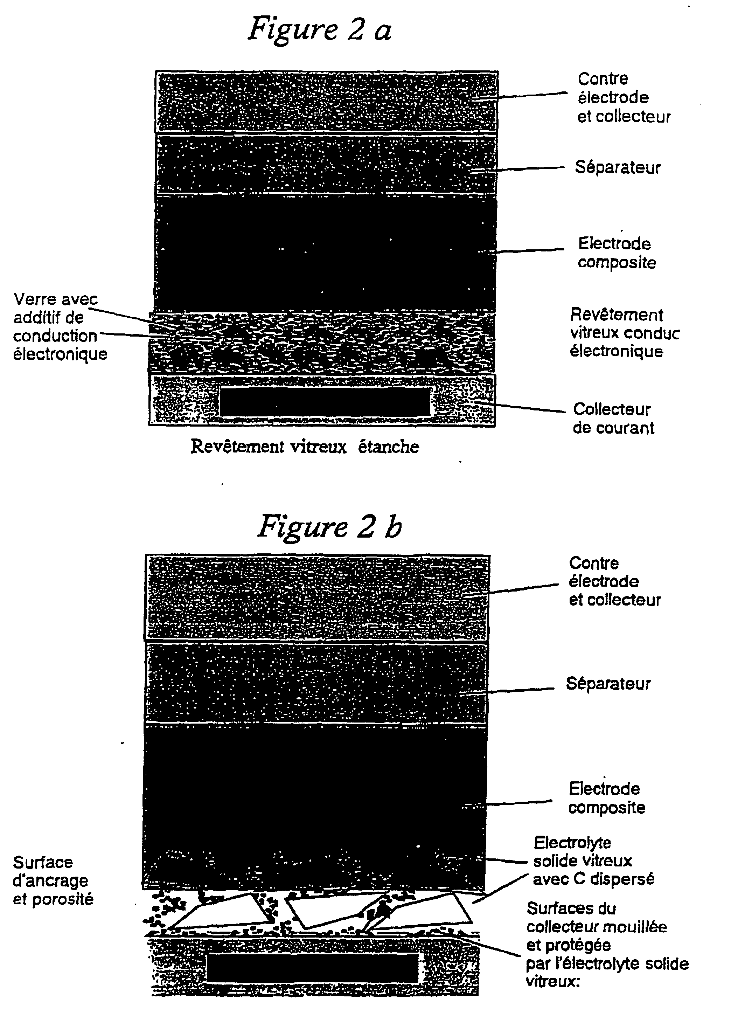

Les Figures 2a) et 2b) illustrent un générateur électrochimique comprenant un collecteur dont la surface a été enduite d'un revêtement selon la présente invention.

Les Figures 3 et 4 illustrent les résultats de cyclage du générateur électrochimique décrit dans l'exemple 3 en présence d'un revêtement protecteur de collecteur à base de (LiPO₃)ₙ et de noir de carbone (Figure 3) et en l'absence d'un tel revêtement (Figure 4).

### DESCRIPTION DÉTAILLÉE DE L'INVENTION

Selon la présente invention, on utilise un liant minéral vitreux ou partiellement vitreux, à base de phosphate, de polyphosphate, de borate, ou de polyborate de métaux alcalins tels que le lithium ou le potassium seuls ou sous forme de mélanges, dans lequel on disperse optionnellement au moins un additif de conduction électronique. Les composés à base de phosphates représentent une mise en oeuvre préférentielle pour mouiller et ainsi protéger des collecteurs métalliques utilisés dans les générateurs électrochimiques. De plus, ces composés en solution dans l'eau permettent de contrôler le pH et d'éviter les réactions acide-base entre le liant minéral et les additifs ou les matériaux d'électrodes lors de la mise en oeuvre des films et de l'utilisation du générateur électrochimique. Des additifs formateurs de verre tels que la silice hydrolysée, les siloxanes, aluminates, titanates organométalliques partiellement ou totalement hydrolysés sont inclus dans la présente invention en autant que ces derniers demeurent chimiquement compatibles avec les additifs de conduction et avec les matériaux actifs de l'électrode, c'est-à-dire en autant que l'on puisse contrôler leurs propriétés acide-base de façon à éviter des réactions chimiques nuisibles au fonctionnement du générateur. L'additif formateur de verre est préférablement ajouté sous forme de solution aqueuse ou alcoolique dans la solution du liant minéral avant la neutralisation, qui est préférablement réalisée à un pH variant entre 4 et 9.

Différents additifs de conduction électronique sont possibles avec les liants de la présente invention. Parmi ceux-ci on retrouve les noirs de carbone, les graphites, les métaux tels que le cuivre et l'argent, les composés minéraux conducteurs métalliques de type carbures, nitrures, siliciures ou même chalcogénures métalliques ou encore les polymères conjugués dopés tels que les polyanilines, les polypyroles etc., et leurs mélanges. Les noirs de carbone et le graphite sont les additifs de conduction électronique préférentiels et peuvent être ajoutés dans des concentrations variant préférentiellement entre 2 et 20% en volume. Ces additifs sont préférablement ajoutés sous forme dispersée dans le liant minéral à l'état pur ou mélangé de façon à induire une conductivité électronique essentielle pour le maintien des échanges d'électrons entre le substrat métallique et les matériaux actifs de l'électrode. Les additifs non-carbonés sont particulièrement recherchés dans les dispositifs de forte puissance ou le niveau de conductivité requis est nettement supérieur à 1 S/cm.

La propriété importante recherchée pour le liant minéral est sa capacité de mouiller et protéger la surface métallique du collecteur de courant, de façon à empêcher l'accès des composantes du générateur à la surface de ce dernier, en l'occurrence l'électrolyte, les matériaux actifs de l'électrode etc. La zone protégée n'étant pas soumise à des réactions de corrosion/passivation, et comportant optionnellement un additif de conduction, elle suffit alors à maintenir un contact électronique permanent entre le métal contacté et les composantes conductrices de l'électrode adjacente.

En milieu polymère sec notamment, où la dissolution complète du collecteur n'est pas observée, il n'est pas nécessaire de recouvrir la totalité de la surface du métal de collection, en autant que seule la surface non-recouverte sera éventuellement passivée sans empêcher les échanges électroniques au niveau des surfaces protégées. Cette caractéristique de l'invention permet ainsi d'optimiser le taux de liant minéral requis de façon à laisser une porosité résiduelle suffisante pour permettre au moins un ancrage superficiel de l'électrode composite sur le revêtement conducteur de protection.

Les épaisseurs recherchées pour les revêtements de la présente invention seront de l'ordre de quelques microns afin de minimiser le poids ou le volume mort du recouvrement relativement aux matériaux actifs du générateur. Préférentiellement, l'épaisseur du générateur est inférieure à 10 micromètres, et plus préférentiellement inférieure à 4 micromètres.

Une façon optionnelle de réaliser l'invention visant à optimiser le contenu énergétique consiste à utiliser en tout ou en partie un additif de conduction électronique qui est également un matériau actif de l'électrode, auquel cas on utilisera un matériau finement broyé, i.e. de taille inférieure au micromètre, pour réduire le stress engendré par les variations volumiques du matériau d'électrode, et on sélectionnera des matériaux dont les variations de volume au cyclage sont inférieures à 10%, et préférentiellement inférieures à 5%. Même si le taux préférentiel de liant minéral doit se situer entre 15 et 95%, dans ce mode de réalisation de l'invention, le taux de liant minéral sera aussi élevé que possible, préférentiellement supérieur à 30%, afin de préserver l'intégrité mécanique et le rôle de liant du verre en dépit des cycles de décharge/charge et des variations de volume.

Un mode de réalisation particulièrement préféré de l'invention consiste à utiliser un polyphosphate de lithium de formule générale (LiPO₃)ₙ, qui peut être préparé en solution aqueuse à partir d'une solution de l'acide (HPO₃)ₙ neutralisée, préférentiellement entre les pH 4 et 9, avec un sel de lithium tel que Li₂O, LiOH ou Li₂CO₃. L'additif de conduction électronique est alors dispersé dans la solution et enduit sur le collecteur de courant.

Les revêtements de collecteur selon la présente invention peuvent être utilisés sur divers type de collecteur de courant, notamment de l'aluminium et des métallisations d'aluminium de quelques centaines d'angström. Il est intéressant de noter que ces dernières sont normalement incompatibles avec un liant minéral basique comme les polysilicates de lithium.

Les exemples suivants sont fournis afin d'illustrer la présente invention, et ne doivent en aucun temps être considérés comme en limitant la portée.

### Exemple 1

Une solution de liant de type (LiPO₃)ₙ est neutralisée à pH voisin de 7 alors qu'une seconde solution est amenée à pH de 11. Les deux solutions sont alors mises en contact avec une poudre de V₂O₅. Dans le premier cas, c'est-à-dire lorsque le pH est voisin de 7, la solution conserve la couleur orangée du V₂O₅, alors que dans le second cas, on constate la formation d'une solution verte résultant d'une réaction chimique entre le liant et l'oxyde solide. Une observation similaire est faite lorsque le même oxyde de vanadium est mis en contact avec une solution aqueuse de polysilicate de lithium. Ces observations sont faites pour illustrer l'importance d'assurer la compatibilité chimique du liant minéral de protection du collecteur avec les matériaux actifs de l'électrode afin d'éviter une détérioration progressive des performances d'un générateur au cyclage.

### Exemple 2

Une solution aqueuse d'acide (HPO₃)ₙ est neutralisée à pH voisin de 7 par de l'hydroxyde de lithium. On y disperse du noir de carbone (Ketjenblack™ EC-600) au taux de 8 % en volume, par rapport au verre de formule (LiPO₃)ₙ. La suspension est ensuite enduite sur un collecteur d'aluminium de 13 micromètres. L'épaisseur obtenue après séchage à 150°C est d'environ 3 micromètres. On constate l'aspect luisant et adhésif du revêtement de protection ainsi que sa conductivité électronique en surface. Un essai identique utilisant l'hydroxyde de potassium pour neutraliser l'acide (HPO₃)ₙ donne un échantillon dont le revêtement est encore plus flexible et adhésif.

### Exemple 3

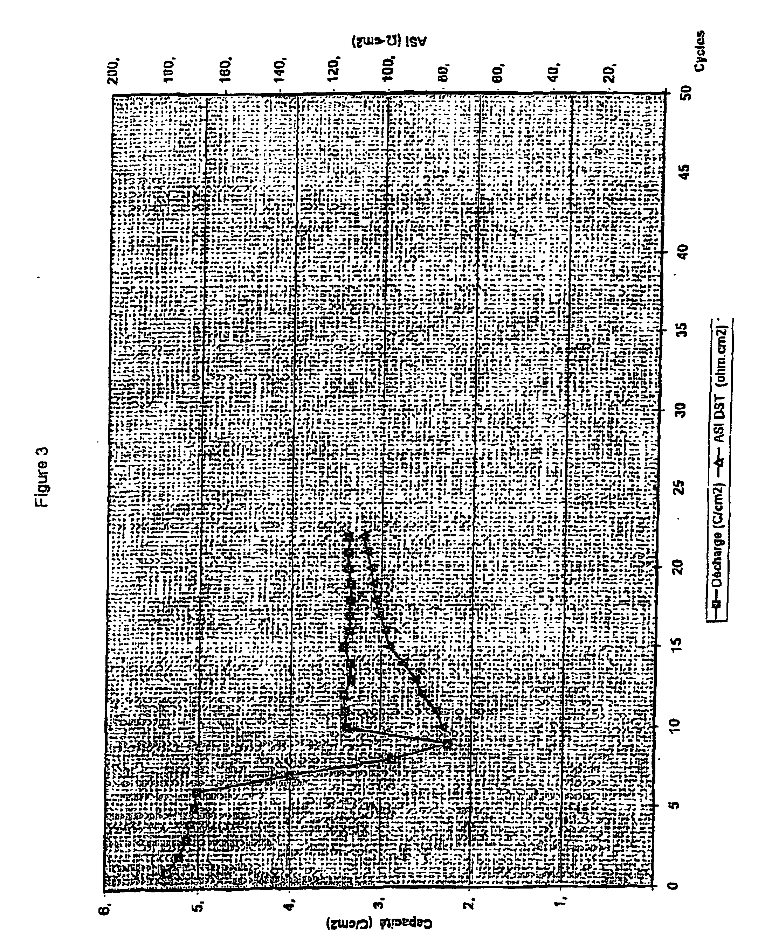

On utilise le collecteur à base de (LiPO₃)ₙ de l'exemple 2 pour la réalisation d'un générateur électrochimique selon les étapes suivantes. Une cathode composite est enduite sur le collecteur protégé à base de (LiPO₃)ₙ de l'exemple 2 pour former un film mince à partir d'une dispersion dans l'acétonitrile des éléments suivants, soient a) un copolymère à base d'oxyde d'éthylène (55 % volume) contenant le sel LiTFSI à une concentration correspondant à un rapport molaire O/Li de 30; b) la poudre V₂O₅ (40 %), et c) le noir de carbone (Ketjenblack™, 5% volume). Après enduction, le film est séché à 80°C sous vide durant 12 heures. On réalise une cellule complète par assemblage successif, par transfert thermique des films de cathode, du séparateur de 20 micromètres également constitué d'un copolymère d'oxyde d'éthylène et de LiTFSI, et d'une anode de lithium métallique. La capacité réversible de la pile est de 5,03 C/cm². La Figure 3 illustre le comportement de cette cellule en fonction du cyclage à 60°C. On constate le bon maintien de la capacité lors des cycles successifs, et principalement le maintien de la valeur de l'A.S.I. (Area Specific Impédance) qui traduit la somme des phénomènes de résistance ohmique, de transfert de charge et de diffusion, et permet ainsi de juger du maintien de la qualité des contacts électriques. Dans cet exemple, l'A.S.I. est d'environ 100 Ω après une trentaine de cycles.

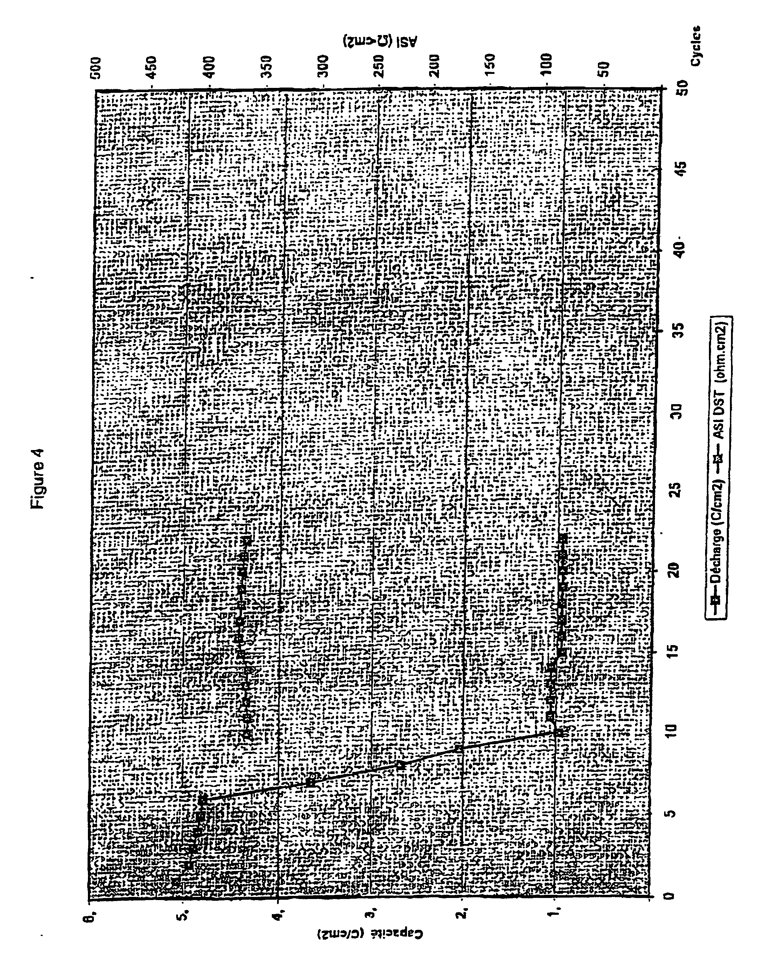

Par opposition, on illustre à la Figure 4, une cellule identique utilisant cependant un collecteur d'aluminium non recouvert du revêtement protecteur selon la présente invention. Les deux cellules sont rechargées à courant constant en 6 heures en utilisant une limite de voltage supérieure de recharge de 3.1 V. On constate dans ce second cas, une perte initiale importante de la capacité et une valeur de l'A.S.I. élevée dès le départ du cyclage. Cette perte est près de quatre fois supérieure à celle de l'essai précédent, confirmant ainsi le rôle protecteur du revêtement faisant l'objet de la présente demande.

### Exemple 4

Un liant à base de polymétaphosphate de potassium (KPO₃)ₙ obtenu selon la procédure de l'exemple 2 est utilisé avec une dispersion de noir de carbone (Ketjenblack™) et de phosphate de fer dont les particules sont de taille submicroniques. Le revêtement protecteur mixte est d'une épaisseur d'environ 4 micromètres. L'apparence visuelle de ce revêtement est semi-brillante, confirmant qualitativement le caractère peu poreux du revêtement protecteur. Le taux de verre utilisé est de 70 % en volume relativement au phosphate de fer (20 % en volume) et au noir de carbone (10 % en volume), afin d'obtenir un revêtement sensiblement dense et peu poreux. Un test de l'activité électrochimique de ce revêtement est effectué en utilisant ce revêtement directement avec un électrolyte polymère constitué d'un copolymère d'oxyde d'éthylène et de LiTFSI et une anode de lithium métallique dans un montage identique à celui de l'exemple 3. On constate alors une activité électrochimique propre à l'additif de phosphate de fer avec un plateau de décharge de 3.3 V et une capacité proportionnelle à la quantité d'additif. Une valeur d'A.S.I. faible et stable en fonction des cycles de décharge/charge est également observée.

Bien que la présente invention ait été décrite à l'aide de mises en oeuvre spécifiques, il est entendu que plusieurs variations et modifications peuvent se greffer aux dites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Générateur électrochimique comprenant un électrolyte séparateur entre deux électrodes dont au moins une des électrodes comprend un collecteur de courant métallique partiellement ou totalement recouvert d'un revêtement conducteur protecteur, chimiquement compatible avec le matériau d'électrode adjacent, ledit revêtement comprenant un liant minéral, vitreux ou partiellement vitreux, incluant un phosphate, un polyphosphate, un borate ou un polyborate d'un métal alcalin, ou leurs mélanges, dans lequel est optionnellement dispersé au moins un additif de conduction électronique assurant les échanges électroniques entre l'électrode et le collecteur, ledit revêtement étant mis en contact étanche avec ledit collecteur afin de protéger la surface métallique couverte de la formation de films de passivation.

2. Un générateur selon la revendication 1 dans lequel le générateur est un générateur au lithium, et le métal alcalin comprend le lithium, le potassium ou leurs mélanges.

3. Un générateur selon la revendication 1 dans lequel le revêtement comprend en outre un formateur de verre.

4. Un générateur selon la revendication 1 dans lequel l'additif de conduction électronique comprend les noirs de carbone, les graphites, les métaux, les composés minéraux conducteurs métalliques, les polymères conjugués dopés et leurs mélanges.

5. Un générateur selon la revendication 1 dans lequel l'additif de conduction électronique comprend un matériau électrochimiquement actif fonctionnant comme matériau d'électrode.

6. Un générateur selon la revendication 5 dans lequel le matériau électrochimiquement actif est similaire ou différent de celui de l'électrode active adjacente.

7. Un générateur selon la revendication 1 dans lequel l'électrode adjacente est une cathode dont le métal du collecteur est l'aluminium, ou dont le collecteur est une métallisation à base d'aluminium.

8. Un générateur selon la revendication 1 dans lequel l'électrode adjacente est une cathode comprenant un oxyde de vanadium ou un phosphate d'un métal de transition de structure nasicon.

9. Un générateur selon la revendication 8 dans lequel la seconde électrode est une anode de lithium.

10. Un générateur selon la revendication 8 dans lequel l'électrolyte séparateur est un électrolyte polymère.

11. Un générateur selon la revendication 1 dans lequel l'électrode adjacente est une anode.

12. Procédé de revêtement partiel ou total d'un protecteur de courant sur la surface d'un collecteur métallique d'une électrode, le procédé comprenant :
a) la préparation d'une dispersion solution aqueuse d'un liant minéral, vitreux ou partiellement vitreux, incluant un phosphate, un polyphosphate, un borate ou un polyborate d'un métal alcalin, ou leurs mélanges, dans lequel on disperse optionnellement au moins un additif de conduction électronique;
b) l'enduction du mélange obtenu dans l'étape a) sur la surface du métal du collecteur, suivi du séchage de façon à couvrir et protéger au moins une partie de la surface du métal afin d'éviter la formation de films de passivation.

13. Procédé selon la revendication 12 dans lequel on ajoute dans l'étape a) un formateur de verre dans la dispersion.

14. Procédé selon la revendication 12 dans lequel le mélange de l'étape a) comprend au moins un additif de conduction électronique.

15. Procédé selon la revendication 12 dans lequel le métal alcalin comprend le lithium, le potassium ou leurs mélanges.

16. Procédé selon la revendication 12 dans lequel l'additif de conduction électronique comprend les noirs de carbone, les graphites, les métaux, les composés minéraux conducteurs métalliques, les polymères conjugués dopés, et leurs mélanges.

17. Électrode comprenant un collecteur de courant métallique partiellement ou totalement recouvert d'un revêtement conducteur protecteur, ledit revêtement comprenant un liant minéral, vitreux ou partiellement vitreux, incluant un phosphate, un polyphosphate, un borate ou un polyborate d'un métal alcalin, ou leurs mélanges, dans lequel est optionnellement dispersé un additif de conduction électronique assurant les échanges électroniques entre l'électrode et le collecteur, ledit revêtement étant mis en contact étanche avec ledit collecteur afin de protéger la surface métallique couverte de la formation de films de passivation

18. Electrode selon la revendication 17 dans laquelle le métal alcalin comprend le lithium, le potassium ou leurs mélanges.

19. Electrode selon la revendication 17 dans laquelle le revêtement comprend un formateur de verre.

20. Electrode selon la revendication 17 dans laquelle l'additif de conduction électronique comprend les noirs de carbone, les graphites, les métaux, les composés minéraux conducteurs métalliques, les polymères conjugués dopés, et leurs mélanges.

21. Electrode selon la revendication 17 dans laquelle l'additif de conduction électronique comprend un matériau électrochimiquement actif fonctionnant comme matériau d'électrode.

22. Electrode selon la revendication 21 dans laquelle le matériau électrochimiquement actif est similaire ou différent de celui de l'électrode active adjacente.

23. Electrode selon la revendication 20 dans laquelle l'additif de conduction électronique comprend les noirs de carbone ou les graphites dont le taux est compris entre 2 et 20% volume.

## Patentansprüche

1. Elektrochemischer Generator, der folgendes aufweist, nämlich einen Separatorelektrolyt zwischen zwei Elektroden, wobei zumindest eine der Elektroden einen metallischen Stromableiter aufweist, der teilweise oder vollständig mit einem leitfähigen Schutzüberzug bedeckt ist, der chemisch mit dem Material der benachbarten Elektrode kompatibel ist, wobei der Überzug ein glasartiges oder teilweise glasartiges mineralisches Bindemittel aufweist, das folgendes aufweist, nämlich ein Alkalimetallphosphat, ein Alkalimetallpolyphosphat, ein Alkalimetallborat oder ein Alkalimetallpolyborat oder Mischungen davon, und in dem gegebenenfalls zumindest ein elektronisch leitfähiger Zusatzstoff dispergiert ist, der den elektronischen Austausch zwischen der Elektrode und dem Ableiter sicherstellt, wobei der Überzug mit dem Ableiter dicht in verbindung steht, um die bedeckte metallische Oberfläche vor der Bildung von Passivierungsschichten zu schützen.

2. Generator nach Anspruch 1, wobei der Generator ein Lithiumgenerator ist, und wobei das Alkalimetall Lithium, Kalium oder Mischungen daraus aufweist.

3. Generator nach Anspruch 1, wobei der Überzug einen weiteren Glasbildner aufweist.

4. Generator nach Anspruch 1, wobei der elektronisch leitfähige Überzug folgendes aufweist, nämlich Ruße, Grafite, Metalle, metallisch leitfähige mineralische Verbindungen, dotierte, konjugierte Polymere und Mischungen davon.

5. Generator nach Anspruch 1, wobei der elektronisch leitfähige Zusatzstoff ein elektrochemisch aktives Material aufweist, das als Elektrodenmaterial wirkt.

6. Generator nach Anspruch 5, wobei das elektrochemisch aktive Material ähnlich oder unterschiedlich von dem der benachbarten aktiven Elektrode ist.

7. Generator nach Anspruch 1, wobei die benachbarte Elektrode eine Kathode ist, in der das Metall des Ableiters Aluminium ist oder in der der Ableiter ein Metallbelag auf Basis von Aluminium ist.

8. Generator nach Anspruch 1, wobei die benachbarte Elektrode eine Kathode ist, die ein Vanadiumoxid oder ein Übergangsmetallphosphat mit Nasicon-Struktur aufweist.

9. Generator nach Anspruch 8, wobei die zweite Elektrode eine Lithiumanode ist.

10. Generator nach Anspruch 8, wobei der Separatorelektrolyt ein Polymerelektrolyt ist.

11. Generator nach Anspruch 1, wobei die benachbarte Elektrode eine Anode ist.

12. Verfahren zum teilweisen oder vollständigen Aufbringen eines Stromschutzes auf die Oberfläche eines Stromableiters einer Elektrode, wobei das verfahren folgendes aufweist:
a) Herstellen einer wässrigen Dispersion/Lösung eines glasartigen oder teilweise glasartigen mineralischen Bindemittels, das folgendes aufweist, nämlich ein Alkalimetallphosphat, ein Alkalimetallpolyphosphat, ein Alkalimetallborat oder ein Alkalimetallpolyborat oder Mischungen davon, in der gegebenenfalls zumindest ein elektronisch leitfähiger Zusatzstoff dispergiert wird;
b) Aufbringen der in Schritt a) erhaltenen Mischung auf die Oberfläche des Metalls des Ableiters, gefolgt von einem Trocknen auf eine Weise, um zumindest einen Teil der Oberfläche des Metalls zu bedecken und zu schützen, um die Bildung von Passivierungsschichten zu vermeiden.

13. verfahren nach Anspruch 12, wobei in Schritt a) zu der Dispersion ein Glasbildner zugegeben wird.

14. Verfahren nach Anspruch 12, wobei die Mischung von Schritt a) zumindest ein elektronisch leitfähigen Zusatzstoff aufweist.

15. verfahren nach Anspruch 12, wobei das Alkalimetall Lithium, Kalium oder Mischungen daraus aufweist.

16. Verfahren nach Anspruch 12, wobei der elektronisch leitfähige Zusatzstoff folgendes aufweist, nämlich Ruße, Grafite, Metalle, metallisch leitfähige mineralische verbindungen, dotierte, konjugierte Polymere und Mischungen davon.

17. Elektrode, die einen metallischen Stromableiter aufweist, der teilweise oder vollständig mit einem leitfähigen Schutzüberzug bedeckt ist, wobei der Überzug ein glasartiges oder teilweise glasartiges mineralisches Bindemittel aufweist, das folgendes aufweist, nämlich ein Alkalimetallphosphat, ein Alkalimetallpolyphosphat, ein Alkalimetallborat oder ein Alkalimetallpolyborat oder Mischungen davon, indem gegebenenfalls ein elektronisch leitfähiger Zusatzstoff dispergiert ist, der den elektronischen Austausch zwischen der Elektrode und dem Ableiter sicherstellt, wobei der Überzug mit dem Ableiter dicht in Verbindung steht, um die bedeckte metallische Oberfläche vor der Bildung von Passivierungsschichten zu schützen.

18. Elektrode nach Anspruch 17, wobei das Alkalimetall Lithium, Kalium oder Mischungen daraus aufweist.

19. Elektrode nach Anspruch 17, wobei der Überzug einen Glasbildner aufweist.

20. Elektrode nach Anspruch 17, wobei der elektronisch leitfähige Zusatzstoff folgendes aufweist, nämlich Ruße, Grafite, Metalle, metallisch leitfähige mineralische Verbindungen, dotierte, konjugierte Polymere und Mischungen davon.

21. Elektrode nach Anspruch 17, wobei der elektronisch leitfähige Zusatzstoff ein elektrochemisch aktives Material aufweist, das als Elektrodenmaterial wirkt.

22. Elektrode nach Anspruch 21, wobei das elektrochemisch aktive Material ähnlich oder unterschiedlich von dem der benachbarten aktiven Elektrode ist.

23. Elektrode nach Anspruch 20, wobei der elektronisch leitfähige Zusatzstoff Ruße oder Grafite in einer Menge von 2 bis 20 Vol.-% aufweist.

## Claims

1. Electrochemical storage battery comprising a separator electrolyte between two electrodes, at least one of the electrodes of which comprises a metal current collector partly or completely covered with a protective conductive coating chemically compatible with the adjacent electrode material, the said coating comprising a glassy or partly glassy, mineral binder that includes a phosphate, a polyphosphate, a borate or a polyborate of an alkali metal, or mixtures thereof, in which at least one electron conduction additive is optionally dispersed, ensuring electron exchange between the electrode and the collector, the said coating being in sealed contact with the said collector so as to protect the covered metal surface from the formation of passivation films.

2. A storage battery according to Claim 1, in which the storage battery is a lithium storage battery, and the alkali metal comprises lithium, potassium or mixtures thereof.

3. A storage battery according to Claim 1, in which the coating furthermore includes a glass former.

4. A storage battery according to Claim 1, in which the electron conduction additive comprises carbon blacks, graphites, metals, metallic conductive mineral compounds, doped conjugated polymers and mixtures thereof.

5. A storage battery according to Claim 1 in which the electron conduction additive comprises an electrochemically active material functioning as an electrode material.

6. A storage battery according to Claim 5, in which the electrochemically active material is similar to or different from that of the adjacent active electrode.

7. A storage battery according to Claim 1, in which the adjacent electrode is a cathode, the metal of the collector of which is aluminium, or the collector of which is an aluminium-based metallization.

8. A storage battery according to Claim 1, in which the adjacent electrode is a cathode comprising a vanadium oxide or a phosphate of a transition metal of nasicon structure.

9. A storage battery according to Claim 8, in which the second electrode is a lithium anode.

10. A storage battery according to Claim 8, in which the separator electrolyte is a polymer electrolyte.

11. A storage battery according to Claim 1, in which the adjacent electrode is an anode.

12. Method of partially or completely coating a current protector on the surface of a metal collector of an electrode, the method comprising:
a) preparation of an aqueous solution dispersion of a glassy or partly glassy, mineral binder that includes a phosphate, a polyphosphate, a borate or a polyborate of an alkali metal, or mixtures thereof, in which at least one electron conduction additive is optionally dispersed; and
b) coating the mixture obtained in step a) on the surface of the metal of the collector, followed by drying in order to cover and protect at least part of the surface of the metal so as to avoid the formation of passivation films.

13. Method according to Claim 12, in which a glass former is added to the dispersion in step a).

14. Method according to Claim 12, in which the mixture of step a) includes at least one electron conduction additive.

15. Method according to Claim 12, in which the alkali metal comprises lithium, potassium or mixtures thereof.

16. Method according to Claim 12, in which the electron conduction additive comprises carbon blacks, graphites, metals, metallic conductive mineral compounds, doped conjugated polymers and mixtures thereof.

17. Electrode comprising a metal current collector partly or completely covered with a protective conductive coating, the said coating comprising a glassy or partly glassy, mineral binder that includes a phosphate, a polyphosphate, a borate or a polyborate of an alkali metal, or mixtures thereof, in which an electron conduction additive is optionally dispersed, ensuring electron exchange between the electrode and the collector, the said coating being brought into sealed contact with the said collector so as to protect the covered metal surface from the formation of passivation films.

18. Electrode according to Claim 17, in which the alkali metal comprises lithium, potassium or mixtures thereof.

19. Electrode according to Claim 17, in which the coating includes a glass former.

20. Electrode according to Claim 17, in which the electron conduction additive comprises carbon blacks, graphites, metals, metallic conductive mineral compounds, doped conjugated polymers and mixtures thereof.

21. Electrode according to Claim 17, in which the electron conduction additive comprises an electrochemically active material functioning as electrode material.

22. Electrode according to Claim 21, in which the electrochemically active material is similar to or different from that of the adjacent active electrode.

23. Electrode according to Claim 20, in which the electron conduction additive comprises carbon blacks or graphites, the content of which is between 2 and 20% by volume.
